Europäisches Patentamt

European Patent Office

Office européen des brevets

(19)

(11) Veröffentlichungsnummer: **0 380 675**

**A1**

(12) **EUROPÄISCHE PATENTANMELDUNG**
veröffentlicht nach Art. 158 Abs. 3
**EPÜ**

(21) Anmeldenummer: **89901597.8**

(22) Anmeldetag: **04.11.88**

(86) Internationale Anmeldenummer:
**PCT/SU88/00222**

(87) Internationale Veröffentlichungsnummer:
**WO 89/09546 (19.10.89 89/25)**

(51) Int. Cl.5: **A23C 9/12**

(30) Priorität: **15.04.88 SU 4428223**

(43) Veröffentlichungstag der Anmeldung:
**08.08.90 Patentblatt 90/32**

(84) Benannte Vertragsstaaten:
**AT BE CH DE FR LI NL SE**

(71) Anmelder: **ORENBURGSKY GOSUDARSTVENNY MEDITSINSKY INSTITUT**
**ul. Sovetskaya 6**
**Orenburg, 460834(SU)**

(72) Erfinder: **NIKITENKO, Vyacheslav Ivanovich**
**ul. Volodarskogo, 27-53**
**Orenburg, 460000(SU)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **VERFAHREN ZUR HERSTELLUNG VON SAUERMILCHPRODUKTEN.**

(57) Das Verfahren zur Herstellung von Sauermilcherzeugnissen besteht darin, daß man die Fermentation von Milch oder Milchprodukten mit den lebenden Bakterien durchführt, wobei als solche der Stamm Bacillus subtilis 534 dient, der am 28.03.88 in der Allunions-Kulturensammlung des Instituts für Biochemie und Physiologie von Mikroorganismen der Akademie der Wissenschaften des UdSSR deponiert und unter Nummer B-1666 Ⅱ registriert ist. Die Fermentation erfolgt bis zur Herstellung des Endprodukts.

EP 0 380 675 A1

# VERFAHREN ZUR HERSTELLUNG VON SAUERMILCHERZEUGNISSEN

## Gebiet der Technik

Die vorliegende Erfindung bezieht sich auf die Lebensmittelindustrie und insbesondere auf ein Verfahren zur Herstellung von Sauermilcherzeignissen.

## Zugrundeliegender Stand der Technik

Bekannt und weit verbreitet sind heute Verfahren zur Herstellung von Sauermilcherzeignissen, nach den man der pasteurisierten Milch oder Buttermilch einen Säurewecker zusetzt, bei dem die Bakterien die Milchsäure produzieren. Das Gerinnen der Milch oder ihrer Bestandteile erfolgt bei einer zwischen 28 und 38 °C liegenden Temperatur innerhalb von 10 bis 24 Stunden. Nach der Gütekontrolle und Bestätigung der Brauchbarkeit des hergestellten Produkts (Kefir, Azidophilusmilch) gelangt es zum Verkauf. Zulässig ist die Lagerung des Produkts bei einer zwischen 2 und 8 °C liegenden Temperatur innerhalb von 24 Stunden. Als Säurewecker bei der Herstellung der erwähnten Produkte benutzt man Milchsäurestreptokokken, azidophile Milchsäurebakterien und Propionsäurebakterien (SU, A, Nr. 1238746, 1287822, 1271479).

Die Sauermilcherzeugnisse, welche nach den angegebenen Verfahren hergestellt werden, weisen eine sehr schwache therapeutisch-prophylaktische Wirkung bei Dysbakterie, Bakterieninfektionen des Magendarmtrakts auf und sind bei eitrigen Entzündungsprozessen, Lebensmittelallergie und Diathese gar unwirksam. Wegen hohen Säuregehalts sind die beschriebenen Produkte bei Geschwür und Gastritis mit vermehrter Sekretion kontraindiziert.

Bei der Herstellung von Sauermilcherzeugnissen nach den angegebenen Verfahren kann die Verunreinigung des hergestellten Produkts mit der bedingt pathogenen Bakterienflora (Staphylokokken, Salmonellen, Shigella und andere Bakterien) erfolgen, was zur Verderbnis des Produkts und manchmal zu Lebensmittelvergiftungen führt. Die bekannten Sauermilchprodukte Kefir, Azodophilusmilch haben eine geringe Lagerzeit (etwa 24 Stunden).

## Offenbarung der Erfindung

Der Erfindung liegt die Aufgabe zugrunde, durch Verwendung einer neuen Bakterienart ein Verfahren zu ent-

- 2 -

wickeln, das Sauermilcherzeugnisse mit der therapeutisch-
-prophylaktischen Wirkung gegen Bakterieninfektionen, Dysbakterie, Diathese und Lebensmittelallergie herzustellen
ermöglicht.

Die Aufgabe wird dadurch gelöst, daß im erfindungsgemäßen Verfahren zur Herstellung von Sauermilcherzeugnissen durch Fermentation von Milch oder Milcherzeugnissen
mit Hilfe der lebenden Bakterien unter Herstellung des
Endproduktes, erfindungsgemäß als lebende Bakterien der
Stamm von Bakterien Bacillus subtilis 534 verwendet wird,
der am 28.03.88 in der Allunions-Kultursammlung des Instituts für Biochemie und Physiologie von Mikroorganismen
der Akademie der Wissenschaften der UdSSR deponiert und
unter Nummer B-1666 Д registriert ist.

Zwecks Fermentation ist der angegebene Stamm in einer
Menge von $10^3$ bis $10^{11}$ lebenden Zellen je 1 dm$^3$ Milch oder
Milchprodukt zweckmäßigerweise zuzugeben.

Das erfindungsgemäße Verfahren bewirkt die Herstellung des Produkts, welches ein wirksames therapeutisch-
-prophylaktisches Verhalten bei Bakterieninfektionen,
Dysbakterie, Diathese und Lebensmittelallergie aufweist.
Dies ist damit verbunden, daß der neue Stamm Eiweißantibiotikum mit breitem Wirkungsspektrum, proteolytische Fermente und Immunomodulator aktiv ins Außenmedium produziert.
Die Bakterien können außerdem in Gewebe des pathologischen
Herdes eindringen, was die Heilwirkung bei eitrigen Entzündungsprozessen außerhalb Magendarmtrakt ergibt. Die bekannten Milcherzeugnisse wurden zu diesem Zweck nicht verwendet.

Infolge hoher Wirksamkeit der vom neuen Stamm ausgeschiedenen antibakteriellen Substanz wird praktisch die Möglichkeit vermieden, daß die pathogenen Bakterien und zwar
Staphylokokken, Streptokokken, Salmonellen, Dysenteriumbakterium in Produkten bei Herstellung von Lagerung vorkommen. Bei den bekannten Verfahren ist die Entwicklung der
genannten pathogenen Bakterien nicht selten nachgewiesen
und führt zur Verderbnis des Produkts und manchmal zum Ausbruch der Infektion. Die unter Verwendung des neuen Stammes

- 3 -

hergestellten Milcherzeugnisse können unter gleichartigen
Bedingungen auf das Zwei- bis Fünffache länger als die nach
den bekannten Verfahren hergestellten Produkte gelagert
werden.

Die nach dem erfindungsgemäßen Verfahren hergestellten
Produkte besitzen einen angenehmen süßlichen Geschmack.

Die beste Ausführungsform der Erfindung

Das erfindungsgemäße Verfahren wird wie folgt durchgeführt.

Man pasteurisiert Milch oder Milcherzeugnisse (Buttermilch, Milchserum) bei einer zwischen 75 und 100 $^{o}$C liegenden Temperatur innerhalb von 15 bis 30 Minuten.

Man bereitet einen Säurewecker zu. Man nimmt dazu die
lyophilisierte dreitägige Stammkultur Bacillus subtilis
534 und stellt ihre Aufschwemmung in Sterilmilch her. Der
Säurewecker wird der Milch oder Milcherzeugnissen, deren
Temperatur 75 bis 100 $^{o}$C beträgt, ausgehend von $10^{3}$ bis $10^{11}$
lebenden Zellen je 1 dm$^{3}$ zugesetzt. Die Fermentation erfolgt bei einer zwischen 30 und 38 $^{o}$C liegenden Temperatur innerhalb von 6 bis 24 Stunden. Nach der Bildung eines
gleichmäßigen dichten Gerinnsels wird die Fermentation vollendet. Man erhält ein schwach süßliches Produkt ohne Geruch.

Der Säuregehalt des hergestellten Produkts schwankt
zwischen 20 bis 50 $^{o}$T. Die Phosphatase fehlt, die Kontamination mit einer fremden Mikroflora tritt nicht auf. Der
Gehalt an Trockenrückstand beträgt 10 bis 14 Masse%.

Der im erfindungsgemäßen Verfahren verwendete neue
Stamm Bacillus subtilis 534 ist beim Menschen isoliert und
mit folgenden morphologischen Merkmalen und physiologischen
Eigenschaften gekennzeichnet.

Das sind Stäbchen. Zellgröße der eintägigen Agarkultur (2.4)x(0,6-0,8) $\mu$m. Bakterien beweglich, bilden Sporen
und keine Kapseln, grampositiv. Kolonien auf Fleisch-Pepton-Agar rauh, mit unebenem Rand, mit schwach rosa Farbe,
Durchmesser 2 bis 12 mm. Der Stamm vermehrt sich bei einer
Temperatur von 15 bis 50 $^{o}$C, Wachstumsoptimum 36 bis 37 $^{o}$C.
Spaltet Glukose, Saccharose und Mannit ohne Gasentwicklung
bis Säure. Fermentiert Laktose nicht. Bildet keinen Schwefelwasserstoff und kein Indol. Scheidet Azetylmethylkarbinol und Katalase aus. Empfindlich gegen Benzylpenizillin, Ampizillin, Erythromyzin, Monomyzin, Linkomyzin, Tetrazyklin, unempfindlich gegen Polymyxin.

Der Stamm produziert das Antibiotikum mit breitem Wirkungsspektrum, das das Wachstum von Staphylokokken, Streptokokken, Proteus, Pyozyaneusbakterium, Salmonellen, Shigellagruppen, Hefepilzen u.a. hemmt. Er scheidet außerdem proteoplytische eiweißspaltende Fermente und Immunomodulator aus.

Untersucht wurde der Antagonismus des angegebenen Stammes gegen Erreger der bakteriellen Infektion.

Der Antagonismus des Stammes Bacillus subtilis 534 gegen Erreger der bakteriellen Infektion wurde nach der von W.I.Nikitenko ausgearbeiteten Methodik bestimmt. Kulturröhrchen mit darin befindlichen 5 cm$^3$ steriler Kohlbach-Nährbouillon wurden mit je 40 bis 50 Mio.Zellen einer Testkultur (Kontrolle) und mit den gleichen Dosen der Testkultur zusammen mit dem angegebenen Stamm beimpft. Kulturröhrchen wurden in einem Thermostat innerhalb von 24 Stunden bei einer Temperatur von 37 $^o$C gehalten. Da die Stammbakterien Bacillus subtilis 534 die Bouillondichte unbedeutend beeinflußten, so bestimmte man den Grad der Wachstumshemmung der Testkultur mit Hilfe eines lichtelektrischen Kolorimeters nach dem Boillondichteunterschied in Versuch und Kontrolle. Als positiv galt das Resultat, wenn die Dichte der Mischkultur auf das 1,2fache und darüber geringer als die Boullondichte der Testkultur war.

Der Stamm Bacillus subtilis 534 hemmte im Wachstum 34 von 37 untersuchten Stämmen des Staphylokokkus, 11 von 12 Stämmen des Streptokokkus, 8 von 12 Stämmen des Kolibakteriums, 7 von 8 Stämmen des Dysenteriebakteriums, 7 von 7 Stämmen der Salmonellagruppe, 6 von 6 Proteusstämmen, 7 von 8 Stämmen des Pyozyaneusbakteriums. Als beständig und weniger empfindlich erwiesen sich hauptsächlich die saprophytierenden Mikroorganismenstämme.

Um die Produktion der antibakteriellen Substanzen ins Außenmedium nachzuweisen, züchtete man die Stammkulturen

- 5 -

Bacillus subtilis 534 (3 Laborreihen) innerhalb von 96 Stunden in Erlenmeyer-Kolben auf einem Schütteltisch (240 U/min) bei einer Temperatur von 28 $^o$C auf einem Nährmedium folgender Zusammensetzung in Masse%: Erbsenmehl 1,5, Saccharose 2,1, Stärke 0,85, NaNO$_3$ 0,5, CaCO$_3$ 0,5 NaCl 0,5, Wasser alles übrige. Die antibakterielle Wirksamkeit von 0,1 cm$^3$ Filtrat der Kulturflüssigkeit wurde durch Diffusion in den 2%igen Fleisch-Pepton-Agar bestimmt. In Betracht gezogen wurde die Größe der Hemmungszonen beim Wachstum von Testkulturen unter Substrahieren des Lochdurchmessers (8 mm).

Die Hemmungszonen bei Staphylokokkus betrugen 24 bis 27 mm, bei Kolibakterium 18 bis 22 mm, bei Klebsiella 18 bis 21 mm, bei Hefepilz 22 bis 24 mm.

Bei der Prüfung der akuten Toxizität wurden 3 Reihen des Präparates aus der lebenden Stammkultur Bacillus subtilis 534 verwendet. Jede Reihe wurde 3 weißen Mäusen und 3 weißen Wistar-Ratten in einer Dosis von 10 bzw. 20 Md. Zellen je 1 cm$^3$ 0,9%ige NaCl-Lösung einmal intraperitonial appliziert. Alle Tiere blieben am Leben. Sie aßen gut Futter. Die Tiere wurden am 3., 7. und 14. Versuchstag geschlachtet. Bei der histologischen Untersuchung waren keine entzündlichen und dystrophischen Änderungen von Gehirn, Lungen, Nieren, Leber und Herzen nachgewiesen. In der Milz traten vergrößerte Follikel und höhere Mengen von lymphohistiozytären Elementen in der roten Pulpa auf.

Zwecks Ermittlung des Grades der akuten Toxizität wurden 3 Präparatreihen aus dem Stamm Bacillus subtilis 534 je mit der Nahrung von 6 weißen Mäusen und 6 weißen Wistar-Ratten in einer Dosis von 10 bzw. 20 Md. Zellen einmal eingenommen. Alle Tiere blieben am Leben. Am nächsten Tag wurden sie geschlachtet. Bei der hinstologischen Untersuchung von Gehirn, Myokard, Lungen, Nieren, Magen, Dünn- und Dickdarm sind die Änderungen gegenüber Kontrolltieren (10 Mäuse und 10 Ratten) nicht nachgewiesen. Die Leber zeigt eine gewisse Vermehrung der Menge von lymphohistiozytären Infiltraten in der Richtung von Portaltrakten. In der Milz traten vergrößerte Follikel und höhere Mengen von lymphohistiozytären Elementen in der roten Pulpa und vielkernigen

- 6 -

Riesenzellen auf.

Bei der Prüfung der chronischen Toxizität wurden 3 Präparatreihen aus dem Stamm Bacillus subtilis 534 je innerhalb von 30 Tagen 3 weißen Mäusen und 3 weißen Wistar-Ratten intraperitoneal in einer Dosis von 200 Mio, bzw. 1 Md. Zellen je 1 cm$^3$ 0,9%ige NaCl-Lösung injiziert. Jede der drei Präparatreihen wurde außerdem in den gleichen Dosen von 6 weißen Mäusen und 6 weißen Wistar-Ratten eingenommen. Alle Tiere blieben am Leben. Der Gewichtszuwachs von Versuchstieren betrug gegenüber Kontrolltieren (10 Mäuse und 10 Ratten) 11 bis 17 % (p < 0,05). Das Haar bei Mäusen und Ratten in Versuchsgruppen war grellweiß, weich. Die Tiere wurden am 31. Tag geschlachtet. Bei der histologischen Untersuchung von Gehirn, Myokard, Nieren, Lungen, Magen, Dünn- und Dickdarm waren die Änderungen nicht nachgewiesen. In der Leber fanden sich lymphohistiozytäre Infiltrate in Richtung von Portalkanälen in einer größeren Menge gegenüber Kontrolltieren. In der Milz von Versuchstieren beobachtete man die Lymphoidisation der roten Pulpa und vergrößerte Follikel, aber die vielkernigen Riesenzellen traten nicht auf.

Im Laufe der Durchführung von Versuchen mit dem Ziel, die chronische Toxizität zu untersuchen, wurden bei 6 weißen Mäusen 23 Mäuschen ohne Abnormität am 11. bis 21. Tag geboren. Die letzteren brachten dann 7 Mäuschen ohne Abnormität zur Welt.

Zwecks Bestimmung der Stabilität des Stammes wurden 9 Kapseln Präparat aus dem Stamm Bacillus subtilis 534 in dicht abgeschlossenen Flakons bei Raumtemperatur innerhalb von 7 Jahren gelagert. Noch 9 Kapseln wurden innerhalb von 3 Monaten bei einer Temperatur von minus 20 bis 22 °C und 9 Kapseln innerhalb von 2 Monaten bei einer Temperatur von 110 °C aufbewahrt. Die Menge von lebenden Bakterien in Kapseln bestimmte man durch Inokulation bei Serienverdünnungen.

Vor Versuchsbeginn waren in Kapseln 5,4±0,5 Md. Zellen, bei Lagerung innerhalb von 7 Jahren 5,2±0,5 Md. Zellen, bei Lagerung bei einer Temperatur von minus 20 bis 22 °C 5,4±0,6 Md. Zellen, bei Lagerung bei einer Temperatur von 110 °C 5,3±0,6 Md. Zellen enthalten. Die gewonnenen Angaben zeugen also davon, daß der angegebene Stamm innerhalb von etwa 7 Jahren in einem weiten Temperaturbereich aufbewahrt werden kann.

Die Prüfung der Eigenschaften des neuen Stammes Bacillus subtilis 534 hat ergeben, das er nichttoxisch ist, keine teratogene und Allergiewirkung aufweist.

Bei der Kultivierung läßt der Stamm die Milch und Milcherzeugnisse durch Ausscheidung von proteolytischen Fermenten gerinnen. Er bildet außerdem eine antibakterielle Eiweißsubstanz mit breitem Wirkungsspektrum und einen Immunomodulator.

Das herstellbare Sauermilchprodukt besitzt einen süßlichen Geschmack und keinen Geruch. Bei einer zwischen 2 und 8 °C liegenden Temperatur wird das Produkt innerhalb von 7 Tagen und darüber ohne Verlust an seinen organoleptischen und therapeutisch-prophylaktischen Eigenschaften gelagert.

Durchgeführt wurden Versuche, die Entwicklung der fremden Mikroflora bei der Herstellung eines Milchprodukts zu ermöglichen. Pasteurisiert wurden 3 dm$^3$ Milch bei einer Temperatur von 90 °C innerhalb von 30 Minuten. Die Milch wurde in 6 Glasflaschen von 0,5 dm$^3$ Fassungsvermögen gefüllt. In jede Flasche wurde je 1 cm$^3$ Säurewecker eingetragen, der je 1 Md. Zellen der lebenden Stammkultur Bacillus subtilis 534 enthält. Man schloß die Flaschen mit Watte-Mull--Stopfen ab und brachte in einen Thermostat ein, wo die Temperatur von 37 °C gehalten wird. Nach 2 Stunden wurden 2 Proben je mit 1 Md. Zellen der lebenden Stammkultur Staphylococcus aureus und 2 andere Proben mit je 1 Md. Zellen der lebenden Stammkultur Shigella flexneri beimpft. Die Bildung eines gleichmäßigen Gerinnsels erfolgt in Versuch nach 14 bis 16 Stunden und in Kontrolle nach 10 bis 12 Stunden. In Versuch und Kontrolle (Milchprodukt) wurde nur mit 1 Stamm Bacillus subtilis 534  beimpft.

Zum besseren Verstehen der vorliegenden Erfindung werden Beispiele für die Herstellung eines Sauermilchprodukts

- 8 -

und seine Verwendung angeführt.

Beispiel 1

Man pasteurisiert 50 dm$^3$ Milch bei einer Temperatur von 75 $^o$C innerhalb von 30 Minuten. Sofort nach der Vollendung der Pasteurisation wird die Milch in Glasflaschen von 0,5 dm$^3$ Fassungsvermögen gefüllt. Man bringt darin je 1 cm$^3$ Säurewecker ein, der 10 Md. Zellen der lebenden Stammkultur Bacillus subtilis 534 enthält. Die Flaschen werden mit Foliendecken abgeschlossen und in einen Thermostat, bei dem die Temperatur von 30 $^o$C gehalten wird, eingebracht. Die Bildung des gleichmäßigen dichten Gerinnsels erfolgt nach 6 Stunden. Man erhält ein Produkt, das einen schwach süßlichen Geschmack und eine gleichmäßige Konsistenz und keinen Geruch hat, die Phosphatase fehlt. Der Säuregehalt beträgt 20 $^o$T. Die Kontamination mit der fremden Mikroflora ist nicht nachgewiesen.

Das hergestellte Milchprodukt wurde bei einer Temperatur von 8 $^o$C innerhalb von 7 Tagen ohne Verlust an seinen organoleptischen Eigenschaften aufbewahrt. Der Säuregehalt nahm unbedeutend auf 28 $^o$T zu. Die Kontamination (Verunreinigung) mit der fremden Mikroflora war nicht nachgewiesen. Unter den gleichen Bedingungen wurden gleichzeitig 6 Proben von unter Verwendung von Milchsäurebakterien hergestelltem Kefir gelagert. Das Produkt wurde nach 48 Stunden unbrauchbar.

Beispiel 2

Man pasteurisiert 2 dm$^3$ Buttermilch innerhalb von 15 Minuten bei einer Temperatur von 100 $^o$C. Zugleich wird sie mit 4 cm$^3$ Säurewecker beimpft, der 500 Zellen der lebenden Stammkultur Bacillus subtilis 534 je 1 cm$^3$ enthält.

Die Milch zusammen mit dem Säurewecker bringt man in einen Thermostat ein, bei dem die Temperatur von 38 $^o$C gehalten wird. Die völlige Fermentation erfolgt nach 24 Stunden. Man erhält ein Produkt, das einen schwach süßlichen Geschmack und keinen Geruch hat. Der Säuregehalt beträgt 49 $^o$T. Die Verunreinigung mit der fremden Mikroflora ist nicht nachgewiesen.

Beispiel 3

Durchgeführt sind Prüfungen an dem nach Beispiel 1 hergestellten Milchprodukt. Eine Kranke S. 11 Monate alt. Diagnose: Diabetes, Dysbakterie. Wegen Pneumonie wurde mit Antibiotika behandelt. Im Alter von 6 Monaten wird Meteorismus und Gesichtshaut- und Korperhautauschlag registriert. Bei der Untersuchung von Kotproben war die Dysbakterie diagnostiziert. Der Kranke wurde das Sauermilchprodukt (hergestellt nach Beispiel 1) je 10 $cm^3$ zweimal täglich auf nüchternen Magen verabreicht. Der Gesichtshaut- und Körperhautausschlag verschwand am 7. bis 8. Tag. Die Kotuntersuchung zeigte am 15. Tag, daß die Zusammensetzung der Mikroflora normal wird.

Beispiel 4

Gemacht ist eine Kur mit dem nach Beispiel 2 hergestellten Sauermilchprodukt. Ein Patient P, 24 Jahre alt. Diagnose: eitrige Wunde des rechten Unterschenkels, Magengeschwür. Das Produkt ist zur Einnahme je 200 $cm^3$ zweimal täglich verordnet. Nach 2 Tagen war der Stamm Bacillus subtilis 534 zusammen mit Staphylococcus aureus in der Wundsekretion nachweisbar. Die Wunde wurde am 11. Tag von Eiter frei und epithelisiert. Der Kranke konstatierte eine verminderte Anfallsintensität von Hungerschmerzen.

Beispiel 5

Das analog zu dem in Beispiel 1 beschriebenen hergestellte Sauermilchprodukt wurde in einer Menge von 10 bis 250 $cm^3$ ein- bis zweimal täglich innerhalb von 10 Tagen zwecks Prophylaxe 4 Kranken verabreicht, welche eine lange Zeit mit Antibiotika behandelt wurden. Die am 12. Tag durchgeführte bakteriologische Kotuntersuchung hat ergeben, daß sich die Zusammensetzung der Mikroflora bei allen Kranken von der normalen nicht unterscheidet. Es gab ebenfalls keine klinische Manifestation der Dysbakterie, während der unterschiedliche Dysbakteriegrad bei 5 Kranken von 7 der Kontrollgruppe diagnostiziert wurde.

Milchprodukte in den gleichen Dosen wurden zur Behandlung der Dysbakterie bei 2, der Diathese bei 3 und der eitrigen Wunden bei 3 Kranken verabreicht. (Ein Patient litt

- 10 -

an Magengeschwür): Klinisch ist die Aufhebung der pathologischen Prozesse am 2. bis 9. Behandlungstag bei allen 8 Patienten zu verzeichnen. Die bakteriologische Kotuntersuchung hat ergeben, daß die Zusammensetzung der Mikroflora am 12. Tag normal wird. Bei 10 gesunden Probanden, die das angegebene Sauermilchprodukt in einer Menge von 250 cm$^3$ zwei- mal täglich innerhalb von 1 Monat einnahmen, waren keine pathologischen Reaktionen nachgewiesen.

Industrielle Anwendbarkeit

Das erfindungsgemäße Verfahren wird zur Herstellung von Sauermilchlebensmitteln verwendet, welche die therapeutischprophylaktischen Eigenschaften besitzen, die zur Prophylaxe und Behandlung von Bakterieninfektionen, Dysbakterie, Diathese und Lebensmittelallergie Verwendung finden.

- 11 -

## PATENTANSPRÜCHE

1. Verfahren zur Herstellung von Sauermilcherzeugnissen durch Fermentation von Milch oder Milcherzeugnissen mit Hilfe der lebenden Bakterien unter Anfallen des Endproduktes, d a d u r c h   g e k e n n z e i c h n e t , daß als lebende Bakterien ein Stamm von Bakterien Bacillus subtilis 534 verwendet wird, der am 29.03.88 in der Allunions--Kulturensammlung des Instituts für Biochemie und Physiologie von Mikroorganismen der Akademie der Wissenschaften der UdSSR deponiert und unter Nummer B 1666 Д registriert ist.

2. Verfahren nach Anspruch 1, d a d u r c h   g e k e n n z e i c h n e t , daß zur Fermentation der Stamm Bacillus subtilis 534 in einer Menge von $10^3$ bis $10^{11}$ lebenden Zellen je 1 $dm^3$ Milch oder Milcherzeugnisse zugegeben wird.

# INTERNATIONAL SEARCH REPORT

International Application No PCT/SU 88/00222

## I. CLASSIFICATION OF SUBJECT MATTER (If several classification symbols apply, indicate all)

According to International Patent Classification (IPC) or to both National Classification and IPC

IPC⁴ A23C 9/12

## II. FIELDS SEARCHED

### Minimum Documentation Searched [7]

| Classification System | Classification Symbols |
|---|---|
| IPC⁴ | A23C 9/12, 9/127 |

### Documentation Searched other than Minimum Documentation to the Extent that such Documents are Included in the Fields Searched

## III. DOCUMENTS CONSIDERED TO BE RELEVANT

| Category | Citation of Document, [11] with Indication, where appropriate, of the relevant passages [12] | Relevant to Claim No. [13] |
|---|---|---|
| A | DE, B2, 2165655 (CALPIS SHOKUHIN KOGYO K. K.) 22 January 1976 (22.01.76) see the claims | 1,2 |
| A | US, A, 3480443 (EVOG) 25 November 1969 (25.11.69) see the abstract | 1,2 |
| A | DE, A1, 3300122 (KLUPSCH, HANS-JOACHIM) 05 July 1984 (05.07.84) see the claims | 1,2 |
| A | SU, A1, 1316629 (Ukrainsky nauchno-issle-dovatelsky institut myasnoi i moloch-noi promyshlennosti) 15 June 1987 (15.06.87) see the claims | 1,2 |
| | SU, A1, 1291110 (Litovsky filial vsesojuznogo nauchno-issledovatelskogo instituta maslodelnoi i syrodelnoi promyshlennosti) 23 February 1987 (23.02.87) see the claims | 1,2 |

----------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 22 March 1989 (22.03.89) | 25 April 1989 (25.04.89) |

| International Searching Authority | Signature of Authorized Officer |
|---|---|
| ISA/SU | |

Form PCT/ISA/210 (second sheet) (January 1985)